(19)

Europäisches
Patentamt
European
Patent Office
Office européen
des brevets

(11)  **EP 3 738 695 A1**

(12)  **EUROPEAN PATENT APPLICATION**
published in accordance with Art. 153(4) EPC

(43) Date of publication:
**18.11.2020  Bulletin 2020/47**

(21) Application number: **19738896.0**

(22) Date of filing: **09.01.2019**

(51) Int Cl.:
**B22F 1/00** (2006.01)  **B22F 3/105** (2006.01)
**B22F 3/16** (2006.01)  **B33Y 70/00** (2020.01)
**C22C 33/02** (2006.01)  **C22C 38/00** (2006.01)
**C22C 38/48** (2006.01)

(86) International application number:
**PCT/JP2019/000268**

(87) International publication number:
**WO 2019/139017 (18.07.2019 Gazette 2019/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **09.01.2018  JP 2018001137**

(71) Applicant: **Sanyo Special Steel Co., Ltd.
Himeji-shi, Hyogo 672-8677 (JP)**

(72) Inventors:
• **KUSE Tetsuji
  Himeji-shi, Hyogo 672-8677 (JP)**
• **NAGATOMI Yuichi
  Himeji-shi, Hyogo 672-8677 (JP)**

(74) Representative: **Müller-Boré & Partner
Patentanwälte PartG mbB
Friedenheimer Brücke 21
80639 München (DE)**

(54)  **STAINLESS STEEL POWDER FOR MOLDING**

(57)  An object of the present invention is to provide:
a stainless steel powder which can be used in a powder-shaping method involving a rapid melting process and a rapid cooling process for solidification to produce a shaped article that is less susceptible to solidification cracking; a powder material for producing a shaped article, containing the stainless steel powder; and a method of producing a shaped article using the stainless steel powder, and, to achieve the object, the present invention provides a powder of a stainless steel, including:
Cr in an amount of 10.5% by mass or more and 20.0% by mass or less;
Ni in an amount of 1.0% by mass or more and 15.0% by mass or less;
C, Si, Mn and N in a total amount of 0% by mass or more and 2.0% by mass or less;
Mo, Cu and Nb in a total amount of 0% by mass or more and 5.0% by mass or less; and
P and S in a total amount of 0% by mass or more and 0.03% by mass;
with the balance being Fe and unavoidable impurities;
wherein the stainless steel satisfies the following formula (1):

$$Cr_{eq}/Ni_{eq} \geq 1.5 \qquad (1).$$

EP 3 738 695 A1

**Description**

BACKGROUND OF THE INVENTION

Field of the Invention

The present invention relates to: a metal powder which can be used in a powder-shaping method involving a rapid melting process and a rapid cooling process for solidification, such as three-dimensional additive manufacturing, thermal spraying, laser coating, cladding or the like; a powder material for producing a shaped article, containing the metal powder; and a method of producing a shaped article using the metal powder. More particularly, the present invention relates to a powder made of a stainless steel (hereinafter, referred to as "stainless steel powder"), a powder material for producing a shaped article, containing the powder, and a method of producing a shaped article using the powder.

Background Art

A three-dimensional (3D) printer is used for producing a shaped article composed of metals. Such a 3D printer produces a shaped article using an additive manufacturing method. In the additive manufacturing method, a laser beam or an electron beam is irradiated to a metal powder which has been spread. The irradiation causes the metal particles in the metal powder to melt. The metal particles are then solidified. The melting and the solidification allow the metal particles to bond with one another. The irradiation is carried out selectively to a portion of the metal powder. The other portion of the metal powder which has not been irradiated do not melt. Thus, a bonding layer is formed only at the portion of the powder which has been irradiated.

On the thus formed bonding layer, the metal powder is further spread. To the newly spread metal powder, the laser beam or the electron beam is irradiated. The irradiation causes the metal particles in the metal powder to melt. The metal particles are then solidified. The melting and the solidification allow the metal particles in the metal powder to bond with one another, to form a new bonding layer. The new bonding layer is also bonded with the existing bonding layer.

By repeatedly carrying out the bonding by irradiation, an assembly of bonding layers gradually grows. The growth of the assembly eventually provides a shaped article having a three-dimensional shape. The additive manufacturing method enables to easily obtain a shaped article having a complex shape. One example of the additive manufacturing method is disclosed in Patent Document 1 (JP 4661842 B).

Examples of materials suitable for the powder to be used in the additive manufacturing method include Fe-based alloys. Fe-based alloys containing 10.5% by mass or more of Cr, namely, stainless steels, are used in a wide range of fields, because of their high corrosion resistance.

Patent Document 2 (JP 2006-233308 A) discloses a stainless steel containing Fe as a main component, and containing, in % by mass: 0.2% or less of C; 0.40% or less of Si; more than 2% and less than 4% of Mn; 0.1% or less of P; 0.03% or less of S; 15% or more and 35% or less of Cr; 1% or less of Ni; and 0.05% or more and 0.6% or less of N; with the balance being Fe and unavoidable impurities. This stainless steel has a two-phase structure composed of an austenite phase and a ferrite phase. The volume fraction of the austenite phase in this stainless steel is from 10% to 85%.

Patent Document 3 (JP 2003-113446 A) proposes a stainless steel containing Fe as a main component, and containing, in % by mass: less than 0.02% of C; 1.0% or less of Si; 1.5% or less of Mn; 0.10% or less of Al; 11.0% or more and 15.0% or less of Cr; more than 0.8% and less than 3.0% of Ni; 0.5% or more and 2.0% or less of Mo; and more than 0.05% and 0.10% or less of N. This stainless steel has low contents of P, S and Si.

Prior Art Documents

Patent Documents

[0008]

　　　Patent Document 1: JP 4661842 B
　　　Patent Document 2: JP 2006-233308 A
　　　Patent Document 3: JP 2003-113446 A

## SUMMARY OF THE INVENTION

Problems to be Solved by the Invention

The stainless steel disclosed in Patent Document 2 (JP 2006-233308 A) is difficult to process. This stainless steel is not suitable for casting and forging. The stainless steel disclosed in Patent Document 3 (JP 2003-113446 A) is also difficult to process. This stainless steel is not suitable for casting and forging.

The additive manufacturing method is drawing attention as a shaping method to be used for a stainless steel, which is difficult to process. However, when the additive manufacturing method is used for processing a stainless steel, solidification cracking is more likely to occur in the resulting shaped article. Therefore, a stainless steel suitable for the additive manufacturing method is needed. Further, a stainless steel is needed which can also be used in another shaping method involving a rapid melting process and a rapid cooling process for solidification, such as thermal spraying, laser coating or cladding, to produce a shaped article that is less susceptible to solidification cracking.

One object of the present invention is to provide: a stainless steel powder which can be used in a powder-shaping method involving a rapid melting process and a rapid cooling process for solidification to produce a shaped article that is less susceptible to solidification cracking; a powder material for producing a shaped article, containing the stainless steel powder; and a method of producing a shaped article using the stainless steel powder.

Solution to the Problems

In order to solve the abovementioned problem, the present invention provides the following inventions.

[1] A powder of a stainless steel including:

Cr in an amount of 10.5% by mass or more and 20.0% by mass or less;
Ni in an amount of 1.0% by mass or more and 15.0% by mass or less;
C, Si, Mn and N in a total amount of 0% by mass or more and 2.0% by mass or less;
Mo, Cu and Nb in a total amount of 0% by mass or more and 5.0% by mass or less; and
P and S in a total amount of 0% by mass or more and 0.03% by mass or less;
with the balance being Fe and unavoidable impurities;
wherein the stainless steel satisfies the following formula (1):

$$Cr_{eq}/Ni_{eq} \geq 1.5 \qquad (1)$$

wherein $Cr_{eq}$ and $Ni_{eq}$ are calculated by the following formulae (1-1) and (1-2), respectively:

$$Cr_{eq} = [Cr] + 1.4[Mo] + 1.5[Si] + 2[Nb] \qquad (1-1)$$

$$Ni_{eq} = [Ni] + 0.3[Mn] + 22[C] + 14[N] + [Cu] \qquad (1-2)$$

wherein [Cr], [Mo], [Si], [Nb], [Ni], [Mn], [C], [N] and [Cu] represent the contents (% by mass) of Cr, Mo, Si, Nb, Ni, Mn, C, N and Cu in the stainless steel, respectively.

[2] The powder according to [1], wherein the total content of C, Si, Mn and N in the stainless steel is 0.3% by mass or more.

[3] The powder according to [1] or [2], including one, two, three or four selected from the group consisting of:

C in an amount of 0.1% by mass or more and 0.2% by mass or less;
Si in an amount of 0.1% by mass or more and 1.0% by mass or less;
Mn in an amount of 0.1% by mass or more and 1.5% by mass or less; and
N in an amount of 0.02% by mass or more and 0.07% by mass or less.

[4] The powder according to any one of [1] to [3], wherein the total content of Mo, Cu and Nb in the stainless steel is 0.1% by mass or more.

[5] The powder according to any one of [1] to [4], including one, two or three selected from the group consisting of:

Mo in an amount of 0.1% by mass or more and 3.6% by mass or less;
Cu in an amount of 0.1% by mass or more and 4.3% by mass or less; and
Nb in an amount of 0.1% by mass or more and 0.8% by mass or less.

[6] The powder according to any one of [1] to [5], wherein, assuming that the powder has a cumulative 50 vol% particle size, $D_{50}$, of X ($\mu$m), and a tap density, TD, of Y ($Mg/m^3$), X/Y is 0.2 or more and 20 or less.

[7] The powder according to any one of [1] to [6], wherein the $D_{50}$ is 4 $\mu$m or more and 70 $\mu$m or less.

[8] The powder according to any one of [1] to [7], wherein the TD is 3.5 $Mg/m^3$ or more and 20 $Mg/m^3$ or less.

[9] A powder material for producing a shaped article, including the powder according to any one of [1] to [8].

[10] A method of producing a shaped article, the method including the following steps of:

preparing the powder according to any one of [1] to [8]; and
subjecting the powder to a powder-shaping method involving a rapid melting process and a rapid cooling process for solidification, to obtain the shaped article,
wherein the structure of the shaped article includes, in its crystal grains, a eutectic structure having a eutectic temperature of 600°C or higher and 1,350°C or lower in an amount of 5% by mass or less, and
wherein the structure of the shaped article includes, in its crystal grain boundaries, a eutectic structure having a eutectic temperature of 600°C or higher and 1,350°C or lower in an amount of 20% by mass or less.

[11] The method according to [10],
wherein the structure of the shaped article includes, in its crystal grains, the eutectic structure having a eutectic temperature of 600°C or higher and 1,350°C or lower in an amount of 2% by mass or less; and
wherein the structure of the shaped article includes, in its crystal grain boundaries, the eutectic structure having a eutectic temperature of 600°C or higher and 1,350°C or lower in an amount of 10% by mass or less.

[12] The method according to [10] or [11], wherein the powder-shaping method is an additive manufacturing method.

[13] The method according to [12], wherein, assuming that an energy density, ED, of Z ($J/mm^3$) is applied to the powder in the additive manufacturing method, and that the powder has a cumulative 50 vol% particle size, $D_{50}$, of X ($\mu$m), Z/X is 0.7 or more and 5.0 or less.

[14] The method according to any one of [10] to [13], wherein the shaped article has a relative density of 95% or more.

Effect of the Invention

The present invention provides: a stainless steel powder which can be used in a powder-shaping method involving a rapid melting process and a rapid cooling process for solidification to produce a shaped article that is less susceptible to solidification cracking; a powder material for producing a shaped article, containing the stainless steel powder; and a method of producing a shaped article using the stainless steel powder. A shaped article having excellent properties can be obtained by a powder-shaping method involving a rapid melting process and a rapid cooling process for solidification, using the stainless steel powder according to the present invention.

DETAILED DESCRIPTION OF THE INVENTION

The present inventors have studied steels in which solidification cracking occurred in a rapid melting process and a rapid cooling process for solidification, and found out that a low-melting point eutectic structure derived from P or S is present in the vicinity of cracks in the grain boundaries. P and S are easily incorporated into the $\delta$ phase. Since a stainless steel having two phases - the $\delta$ phase and the $\gamma$ phase - includes a large volume of grain boundaries, P and S are easily dispersed. As a result, shrinkage during the solidification causes the occurrence of cracks. Such a low-melting point eutectic structure is abundantly present in the grain boundaries, and also crystallizes within the grains when the contents of P and S are increased. As a result of intensive studies, the present inventors have obtained a stainless steel powder which can be used in a powder-shaping method involving a rapid melting process and a rapid cooling process for solidification to produce a shaped article that is less susceptible to solidification cracking, by controlling the amounts of respective elements, namely, essential elements (Cr, Ni and Fe) and optional elements (C, Si, Mn, N, Mo, Cu and Nb), within predetermined ranges, and by controlling the total amount of P and S as unavoidable impurities within a predetermined range. The stainless steel powder according to the present invention can be used in a powder-shaping method involving a rapid melting process and a rapid cooling process for solidification to produce a shaped article that is less susceptible to solidification cracking, and has good shaping properties. Therefore, the stainless steel powder according to the present invention is useful as a powder material for producing a shaped article using a powder-shaping method involving a rapid melting process and a rapid cooling process for solidification, such as three-dimensional additive manufacturing, thermal spraying, laser coating or cladding.

The stainless steel powder according to the present invention is an aggregation of a number of stainless steel particles. The material of the stainless steel particles is a stainless steel. The stainless steel according to the present invention contains Cr and Ni. The stainless steel according to the present invention can contain one or more elements selected from Mo, Cu, Nb, Si, Mn, C and N. The balance in the stainless steel according to the present invention is Fe and unavoidable impurities. The stainless steel according to the present invention will now be described in detail. It is noted that the expression "% by mass" as used herein is based on the mass of the stainless steel, unless otherwise defined.

[Chromium (Cr)]

Cr forms an oxide film on the surface of the resulting shaped article. The oxide film contributes to the corrosion resistance of the shaped article. Further, Cr easily forms a carbide, and enhances the hardenability of the shaped article. A shaped article having an excellent hardenability has a high hardness as well as a high strength. From these points of view, the stainless steel preferably has a Cr content of 10.5% by mass or more, more preferably 12.0% by mass or more, and still more preferably 15.0% by mass or more. Cr is a ferrite-forming element, and a ferrite structure is more likely to remain even after carrying out a hardening treatment, in a stainless steel containing a large amount of Cr. When the content of Cr is controlled to equal to or lower than a predetermined value, a decrease in the hardenability of the resulting shaped article is prevented. Accordingly, the resulting shaped article has a high hardness as well as a high strength. From these points of view, the stainless steel preferably has a Cr content of 20.0% by mass or less, more preferably 18.5% by mass or less, and still more preferably 18.0% by mass or less.

[Nickel (Ni)]

Ni enhances the adhesion of the oxide film produced by Cr. A shaped article produced from a stainless steel containing both Ni and Cr has an excellent corrosion resistance. From these points of view, the stainless steel preferably has a Ni content of 1.0% by mass or more, more preferably 3.0% by mass or more, and still more preferably 4.0% by mass or more. Ni is an austenite-forming element, and an austenite phase is easily formed in a stainless steel containing a large amount of Ni. The austenite phase reduces the hardness and the strength of the resulting shaped article. From these points of view, the stainless steel preferably has a Ni content of 15.0% by mass or less, more preferably 13.0% by mass or less, and still more preferably 11.0% by mass or less.

[Carbon (C), Manganese (Mn) and Nitrogen (N)]

C, Mn and N are austenite-forming elements. A stainless steel with low contents of C, Mn and N has a suitable martensite transformation temperature. The respective contents of C, Mn and N in the stainless steel can be adjusted as appropriate from these points of view, and are not particularly limited as long as the total content of C, Si, Mn and N is within a desired range.

In one embodiment, the stainless steel has a C content of 0% by mass. In another embodiment, the stainless steel has a C content of more than 0% by mass. In the embodiment in which the C content in the stainless steel is more than 0% by mass, the C content is preferably 0.1% by mass or more and 0.2% by mass or less, more preferably 0.1% by mass or more and 0.18% by mass or less, and still more preferably 0.1% by mass or more and 0.15% by mass or less.

In one embodiment, the stainless steel has a Mn content of 0% by mass. In another embodiment, the stainless steel has a Mn content of more than 0% by mass. In the embodiment in which the Mn content in the stainless steel is more than 0% by mass, the Mn content is preferably 0.1% by mass or more and 1.5% by mass or less, more preferably 0.1% by mass or more and 1.2% by mass or less, and still more preferably 0.1% by mass or more and 1.0% by mass or less.

In one embodiment, the stainless steel has an N content of 0% by mass. In another embodiment, the stainless steel has an N content of more than 0% by mass. In the embodiment in which the N content in the stainless steel is more than 0% by mass, the N content is preferably 0.02% by mass or more and 0.07% by mass or less, more preferably 0.02% by mass or more and 0.06% by mass or less, and still more preferably 0.02% by mass or more and 0.05% by mass or less.

[Silicon (Si)]

Si is a ferrite-forming element. A stainless steel having a low Si content can contribute to an improvement in the toughness of the resulting shaped article. The Si content in the stainless steel can be adjusted as appropriate from these points of view, and is not particularly limited as long as the total content of C, Si, Mn and N is within a desired range. In one embodiment, the stainless steel has a Si content of 0% by mass. In another embodiment, the stainless steel has a Si content of more than 0% by mass. In the embodiment in which the Si content in the stainless steel is more than 0% by mass, the Si content is preferably 0.1% by mass or more and 1.0% by mass or less, more preferably 0.1% by mass or more and 0.8% by mass or less, and still more preferably 0.1% by mass or more and 0.6% by mass or less.

[C + Si + Mn + N (Total Content of C, Si, Mn and N)]

From the viewpoint of improving the toughness of the resulting shaped article, the total content of C, Si, Mn and N in the stainless steel is preferably 2.0% by mass or less, more preferably 1.7% by mass or less, and still more preferably 1.5% by mass or less.

In one embodiment, the total content of C, Si, Mn and N in the stainless steel is 0% by mass. In another embodiment, the total content of C, Si, Mn and N in the stainless steel is more than 0% by mass. In the embodiment in which the total content of C, Si, Mn and N in the stainless steel is more than 0% by mass, the total content of C, Si, Mn and N is preferably 0.3% by mass or more, more preferably 0.4% by mass or more, still more preferably 0.5% by mass or more, and yet still more preferably 0.52% by mass or more. In the embodiment in which the total content of C, Si, Mn and N in the stainless steel is more than 0% by mass, the total content of C, Si, Mn and N in the stainless steel is preferably 2.0% by mass or less, more preferably 1.7% by mass or less, and still more preferably 1.5% by mass or less. The upper limit value and the lower limit value of the total content of C, Si, Mn and N in the stainless steel can be freely selected and combined.

In the embodiment in which the total content of C, Si, Mn and N in the stainless steel is more than 0% by mass, the stainless steel contains one kind, two kinds, three kinds or four kinds of elements selected from C, Si, Mn and N. In cases where the stainless steel contains one kind of element selected from C, Si, Mn and N, the total content of C, Si, Mn and N refers to the content of the one kind of element. In cases where the stainless steel contains two kinds of elements selected from C, Si, Mn and N, the total content of C, Si, Mn and N refers to the total content of the two kinds of elements. In cases where the stainless steel contains three kinds of elements selected from C, Si, Mn and N, the total content of C, Si, Mn and N refers to the total content of the three kinds of elements. In cases where the stainless steel contains four kinds of elements selected from C, Si, Mn and N, the total content of C, Si, Mn and N refers to the total content of the four kinds of elements.

[Molybdenum (Mo)]

Mo can contribute to an improvement in the hardness and the strength of the resulting shaped article, by being combined with Cr. On the other hand, the addition of a large amount of Mo reduces the hardenability of the shaped article, thereby decreasing the hardness thereof. The Mo content in the stainless steel can be adjusted as appropriate from these points of view, and is not particularly limited as long as the total content of Mo, Cu and Nb is within a desired range. In one embodiment, the stainless steel has a Mo content of 0% by mass. In another embodiment, the stainless steel has a Mo content of more than 0% by mass. In the embodiment in which the Mo content in the stainless steel is more than 0% by mass, the Mo content is preferably 0.05% by mass or more, more preferably 0.10% by mass or more, and still more preferably 0.15% by mass or more. In the embodiment in which the Mo content in the stainless steel is more than 0% by mass, the Mo content is preferably 3.6% by mass or less, more preferably 2.5% by mass or less, and still more preferably 2.0% by mass or less.

[Copper (Cu)]

A stainless steel which contains Cu along with Ni can contribute to an improvement in the corrosion resistance of the resulting shaped article. On the other hand, Cu is an austenite-forming element, and the addition of a large amount of Cu adversely affects the martensite transformation temperature. The Cu content in the stainless steel can be adjusted as appropriate from these points of view, and is not particularly limited as long as the total content of Mo, Cu and Nb is within a desired range. In one embodiment, the stainless steel has a Cu content of 0% by mass. In another embodiment, the stainless steel has a Cu content of more than 0% by mass. In the embodiment in which the Cu content in the stainless steel is more than 0% by mass, the Cu content is preferably 0.05% by mass or more, more preferably 0.10% by mass or more, and still more preferably 0.15% by mass or more. In the embodiment in which the Cu content in the stainless steel is more than 0% by mass, the Cu content is preferably 4.3% by mass or less, more preferably 4.0% by mass or less, and still more preferably 3.5% by mass or less.

[Niobium (Nb)]

Nb forms a carbide in the stainless steel. The carbide can contribute to an improvement in the strength of the resulting shaped article. On the other hand, Nb is a ferrite-forming element, and the addition of a large amount of Nb reduces the toughness of the shaped article. The Nb content of in the stainless steel can be adjusted as appropriate from these points of view, and is not particularly limited as long as the total content of Mo, Cu and Nb is within a desired range. In one embodiment, the stainless steel has a Nb content of 0% by mass. In another embodiment, the stainless steel has a Nb content of more than 0% by mass. In the embodiment in which the Nb content in the stainless steel is more than 0% by mass, the Nb content is preferably 0.05% by mass or more, more preferably 0.10% by mass or more, and still more preferably 0.15% by mass or more. In the embodiment in which the Nb content in the stainless steel is more than 0% by mass, the Nb content is preferably 0.8% by mass or less, more preferably 0.6% by mass or less, and still more preferably 0.5% by mass or less.

[Mo + Cu + Nb (Total Content of Mo, Cu and Nb)]

From the viewpoint of improving the toughness of the resulting shaped article, the total content of Mo, Cu and Nb in the stainless steel is preferably 5.0% by mass or less, more preferably 4.5% by mass or less, and still more preferably 4.0% by mass or less.

In one embodiment, the total content of Mo, Cu and Nb in the stainless steel is 0% by mass. In another embodiment, the total content of Mo, Cu and Nb in the stainless steel is more than 0% by mass. In the embodiment in which the total content of Mo, Cu and Nb in the stainless steel is more than 0% by mass, the total content of Mo, Cu and Nb is preferably 0.1% by mass or more, more preferably 0.15% by mass or more, still more preferably 0.16% by mass or more, and yet still more preferably 0.2% by mass or more. In the embodiment in which the total content of Mo, Cu and Nb in the stainless steel is more than 0% by mass, the total content of Mo, Cu and Nb is preferably 5.0% by mass or less, more preferably 4.5% by mass or less, and still more preferably 4.0% by mass or less. The upper limit value and the lower limit value of the total content of Mo, Cu and Nb in the stainless steel can be freely selected and combined.

In the embodiment in which the total content of Mo, Cu and Nb in the stainless steel is more than 0% by mass, the stainless steel contains one kind, two kinds or three kinds of elements selected from Mo, Cu and Nb. In cases where the stainless steel contains one kind of element selected from Mo, Cu and Nb, the total content of Mo, Cu and Nb refers to the content of the one kind of element. In cases where the stainless steel contains two kinds of elements selected from Mo, Cu and Nb, the total content of Mo, Cu and Nb refers to the total content of the two kinds of elements. In cases where the stainless steel contains three kinds of elements selected from Mo, Cu and Nb, the total content of Mo, Cu and Nb refers to the total content of the three kinds of elements.

[Chromium Equivalent ($Cr_{eq}$)]

In the present invention, the chromium equivalent ($Cr_{eq}$) is calculated by the following formula:

$$Cr_{eq} = [Cr] + 1.4[Mo] + 1.5[Si] + 2[Nb].$$

In the above described formula, [Cr], [Mo], [Si] and [Nb] represent the contents (% by mass) of Cr, Mo, Si and Nb in the stainless steel according to the present invention, respectively.

Cr, Mo, Si and Nb are ferrite-forming elements. The chromium equivalent ($Cr_{eq}$) is an index which indicates the ease of formation of ferrite in the stainless steel.

[Nickel Equivalent ($Ni_{eq}$)]

In the present invention, the nickel equivalent ($Ni_{eq}$) is calculated by the following formula:

$$Ni_{eq} = [Ni] + 0.3[Mn] + 22[C] + 14[N] + [Cu].$$

In the above described formula, [Ni], [Mn], [C], [N] and [Cu] represent the contents (% by mass) of Ni, Mn, C, N and Cu in the stainless steel according to the present invention, respectively.

Ni, Mn, C, N and Cu are austenite-forming elements. The nickel equivalent ($Ni_{eq}$) is an index which indicates the ease of formation of austenite in the stainless steel.

[$Cr_{eq}/Ni_{eq}$]

From the viewpoint of reducing the occurrence of solidification cracking during the transformation of austenite into martensite, in the resulting shaped article, the ratio ($Cr_{eq}/Ni_{eq}$) of the chromium equivalent ($Cr_{eq}$) to the nickel equivalent ($Ni_{eq}$) preferably satisfies the following formula (1):

$$Cr_{eq}/Ni_{eq} \geq 1.5 \qquad (1).$$

In other words, the ratio ($Cr_{eq}/Ni_{eq}$) is preferably 1.5 or more. The ratio ($Cr_{eq}/Ni_{eq}$) is more preferably 2.0 or more, and still more preferably 2.5 or more. The ratio ($Cr_{eq}/Ni_{eq}$) is preferably 100 or less, more preferably 50 or less, and still more preferably 20 or less.

[Phosphorus (P) and Sulfur (S)]

P and S can be contained in the stainless steel as unavoidable impurities. In the stainless steel, P and S are easily incorporated into the $\delta$ phase. Since a stainless steel having two phases - the $\delta$ phase and the $\gamma$ phase - has a large area of grain boundaries, it causes P and S to be dispersed. P and S cause the occurrence of cracks due to shrinkage during solidification. From the viewpoint of reducing the occurrence of solidification cracking, the contents of P and S preferably satisfy the following formula (2):

$$[P] + [S] \leq 0.03\% \text{ by mass} \qquad (2).$$

In the above described formula, [P] represents the content (% by mass) of P in the stainless steel according to the present invention, and [S] represents the content (% by mass) of S in the stainless steel according to the present invention.

In other words, the total of the content of P and the content of S in the stainless steel according to the present invention is preferably 0.03% by mass or less. The total of the content of P and the content of S is more preferably 0.02% by mass or less. Ideally, the content of P is 0, and the content of S is content is also 0.

[Cumulative 50 vol% particle size, $D_{50}$ ($\mu$m)]

The particle size $D_{50}$ ($\mu$m) is the particle size at the point where the cumulative volume of the powder is 50%, in a volume-based cumulative frequency distribution curve which is determined taking the total volume of the powder as 100%. The particle size is measured by a laser diffraction scattering particle size distribution analyzer, "Microtrac MT3000", manufactured by Nikkiso Co., Ltd. The powder and pure water are poured into the cell of the above mentioned analyzer, and the particle size is detected based on the light scattering information of the particles of the powder.

The stainless steel powder according to the present invention has a particle size $D_{50}$ of preferably 4 $\mu$m or more and 70 $\mu$m or less. It is possible to obtain a shaped article in which unmelted particles of the powder do not remain and no inert gas is entrapped, from the stainless steel powder having a particle size $D_{50}$ within the above described range. From this point of view, the particle size $D_{50}$ is more preferably 15 $\mu$m or more and 50 $\mu$m or less, and still more preferably 20 $\mu$m or more and 30 $\mu$m or less.

[Tap density, TD ($Mg/m^3$)]

The stainless steel powder according to the present invention has a tap density, TD, of preferably 3.5 $Mg/m^3$ or more and 20$Mg/m^3$ or less, more preferably 3.7 $Mg/m^3$ or more and 18 $Mg/m^3$ or less, and still more preferably 4.0 $Mg/m^3$ or more and 15 $Mg/m^3$ or less. The unit "$Mg/m^3$" has the same meaning as the unit "g/cc". The tap density is measured in accordance with JIS Z2512.

[$D_{50}$/TD]

Assuming that the $D_{50}$ is X ($\mu$m), and that the TD is Y ($Mg/m^3$), the value of X/Y is preferably 0.2 or more and 20 or less. A powder in which the value of X/Y is 0.2 or more has an excellent flowability. A shaped article having a high density can be obtained from such a powder. From this point of view, the value of X/Y is more preferably 1 or more, and still more preferably 3 or more. In a shaped article obtained from a powder in which the value of X/Y is 20 or less, unmelted particles of the powder are less likely to remain in the interior of the shaped article. From this point of view, the value of X/Y is more preferably 18 or less, and still more preferably 16 or less.

[Production of Shaped Article (Molded Article)]

The stainless steel powder according to the present invention can be used as a powder material for producing a shaped article. The powder material for producing a shaped article may consist of the stainless steel powder according to the present invention, or may further contain a powder other than the stainless steel powder according to the present invention. The powder material for producing a shaped article may contain, for example, a powder binder (such as a resin powder) or the like. It is possible to produce a shaped article, by carrying out a powder-shaping method using the stainless steel powder according to the present invention as a powder material for producing a shaped article. In a preferred embodiment, a shaped article (shaped object) is obtained by subjecting the stainless steel powder according to the present invention to a powder-shaping method involving a rapid melting process and a rapid cooling process for solidification. Examples of such a powder-shaping method include methods such as three-dimensional additive manufacturing, thermal spraying, laser coating and cladding. In a preferred embodiment, a shaped article (shaped object) is produced by a three-dimensional additive manufacturing method. Examples of the three-dimensional additive manufacturing method include methods such as powder bed fusion and directed energy deposition. The powder bed fusion method is also referred to as SLS (Selective Laser Sintering), DMLS (Direct Metal Laser Sintering), EMB (Electron Beam Melting), SLM (Selective Laser Melting) or DLP (Direct Metal Printing), and a laser beam or an electron beam is usually used therein. The directed energy deposition method is also referred to as LMD (Laser Metal Deposition) or DMP (Direct Metal Deposition), and a laser beam is usually used therein.

In the three-dimensional additive manufacturing method, a 3D printer can be used. In the additive manufacturing method, a laser beam or an electron beam is irradiated to a spread layer of the stainless steel powder (stainless steel powder layer). The irradiation causes the stainless steel particles to be heated rapidly and to melt rapidly. The stainless steel particles are then rapidly solidified. The melting and the solidification allow the stainless steel particles to bond with one another. The irradiation is carried out selectively to a portion of the stainless steel powder layer. The stainless steel particles present in the portion of the stainless steel powder layer which has not been irradiated do not melt. Thus, a bonding layer is formed only at the portion of the stainless steel powder layer which has been irradiated.

On the thus formed bonding layer, the stainless steel powder is further spread to form a stainless steel powder layer. To the thus formed stainless steel powder layer, the laser beam or the electron beam is irradiated. The irradiation causes the stainless steel particles to rapidly melt. The stainless steel particles are then rapidly solidified. The melting and the solidification allow the stainless steel particles in the stainless steel powder layer to bond with one another, to form a new bonding layer. The new bonding layer is also bonded with the existing bonding layer.

By repeatedly carrying out the bonding by irradiation, an assembly of bonding layers gradually grows. The growth of the assembly eventually provides a shaped article having a three-dimensional shape. The additive manufacturing method as descried above enables to easily obtain a shaped article having a complex shape.

In one embodiment, the three-dimensional additive manufacturing method includes a data processing step and a powder shaping step. The three-dimensional additive manufacturing method may include a heat treatment step, after the powder shaping step. One embodiment of the three-dimensional additive manufacturing method will now be described.

In the data processing step, three-dimensional shape data are first produced by 3D-CAD or the like. The three-dimensional shape data are then converted to STL data. The STL data are subjected to element division (meshing) by the finite element method, for example. In the data processing step, slice data are then produced from the STL data. The STL data are divided into layers in the number of n, from a first shaping layer to an n-th shaping layer. The slice thickness is, for example, from 10 to 150 $\mu$m.

In the powder shaping step, a layered and shaped article is produced based on the slice data. In the powder shaping step, a laser additive manufacturing apparatus is used, for example, which includes: a piston; a table supported by the piston; and a laser output unit which serve as an output unit for outputting a laser beam which solidifies the metal powder. The powder shaping step is carried out, for example, in an inert gas atmosphere, in order to reduce the oxidation of the shaped article. The inert gas may be, for example, argon (Ar) gas, nitrogen ($N_2$) gas or helium (He) gas. A reducing gas such as hydrogen ($H_2$) gas may be used instead of the inert gas. Further, a vacuum pump or the like may be used to provide a reduced pressure atmosphere. The table is configured such that it can be elevated and lowered by the piston, and the layered and shaped article is formed on the table.

In the powder shaping step, a powder layer containing the metal powder is first formed. Based on the slice data, the piston lowers the table by a height corresponding to one layer, and the metal powder in an amount required for forming one layer is spread on the table. In this manner, a first powder layer containing the metal powder is formed. The surface of the first powder layer is smoothed by a squeezing blade or the like. The powder layer may contain a powder binder (such as a resin powder) or the like, in addition to the metal powder.

In the powder shaping step, a shaped layer which constitutes a portion of the layered and shaped article is formed. The laser output unit irradiates a laser beam to a predetermined position of the first powder layer, based on the slice data. The powder layer may be heated in advance, before the irradiation of the laser beam. The portion of the metal powder irradiated with the laser beam is melted, sintered, and then solidified. In this manner, the metal powder in the predetermined position in the first powder layer is solidified, to form the first shaped layer. A general-purpose laser apparatus can be used as the laser output unit. The light source of the laser beam may be, for example, a fiber laser, a YAG laser, a $CO_2$ laser or a semiconductor laser.

After completing the formation of the first shaped layer, the piston further lowers the table by a height corresponding to one layer. Subsequently, a second powder layer is formed in the same manner as described above, and then a second shaped layer is formed based on the slice data. Thereafter, a third shaped layer, a fourth shaped layer, and so on, up to the n-th shaped layer are formed, in the same manner as described above, thereby completing the formation of the layered and shaped article.

[ED/$D_{50}$]

When a shaped article is produced using the stainless steel powder according to the present invention, the balance between the energy density, ED ($J/mm^3$), to be applied to the stainless steel powder and the cumulative 50 vol% particle size, $D_{50}$ ($\mu m$), of the stainless steel powder is important. A powder with a large value of $D_{50}$ has a small surface area, and thus, the heat of the beam transmitted to the interior of the particles of the powder is low. Therefore, unmelted particles of the powder are more likely to remain in the interior of the resulting shaped article. When the energy density, ED, is high, unmelted particles of the powder are less likely remain in the shaped article. However, a high energy density, ED, causes hot liquid produced by the melting of the powder to generate a phenomenon similar to bumping, making an inert gas more likely to be entrapped in the shaped article. From the viewpoint of producing a decent shaped article, assuming that the ED is Z ($J/mm^3$) and that the $D_{50}$ is X ($\mu m$), the value of Z/X preferably satisfies the following formula (3):

$$0.7 \leq Z/X \leq 5.0 \qquad\qquad (3).$$

In other words, the value of Z/X is preferably 0.7 or more and 5.0 or less. From the viewpoint of preventing the unmelted particles of the powder from remaining in the shaped article, the value of Z/X is more preferably 1.0 or more, and still more preferably 1.2 or more. From the viewpoint of preventing the inert gas from being entrapped in the shaped article, the value of Z/X is more preferably 4.5 or less, and still more preferably 4.0 or less.

The energy density, ED ($J/mm^3$), represents the energy of the beam irradiated per unit volume. The energy density, ED ($J/mm^3$), can be calculated in accordance with the following formula:

$$ED = P/ (V \times d \times t).$$

In the above described formula, P represents the output (W) of the beam, V represents the scanning speed (mm/s) of the beam, d represents the scanning pitch (mm) of the beam, and t represents the layer thickness (mm) of the stainless steel powder.

The output of the beam is usually from 30 to 400 W, and preferably from 150 to 250 W; the scanning speed is usually from 300 to 1,500 mm/s, and preferably from 600 to 1,200 mm/s; the scanning pitch is usually from 0.03 to 1.50 mm, and preferably from 0.06 to 1.20 mm; and the layer thickness is usually from 0.01 to 0.10 mm, and preferably from 0.02 to 0.05 mm.

[Eutectic Structure]

In a shaped article obtained by subjecting the powder to a rapid melting process and a rapid cooling process for solidification, low-melting point compounds are more likely to segregate at austenite grain boundaries. These low-melting point compounds contain P, S, Si and Nb. Such low-melting point compounds have a eutectic structure. Specific examples of the eutectic structure include a Fe-FeS eutectic structure. This eutectic structure has a melting point of about 998°C.

The structure of the shaped article preferably includes, in its crystal grain boundaries, a eutectic structure having a eutectic temperature of 600°C or higher and 1,350°C or lower in an amount of 20% by mass or less. In the production of a shaped article in which the amount of the above described eutectic structure in the grain boundaries is 20% by mass or less, solidification cracking is less likely to occur. From this point of view, the amount of the eutectic structure is more preferably 15% by mass or less, and still more preferably 10% by mass or less.

The structure of the shaped article preferably includes, in its crystal grains, a eutectic structure having a eutectic temperature of 600°C or higher and 1,350°C or lower in an amount of 5% by mass or less. When a shaped article in which the amount of the above described eutectic structure in the crystal grains is 5% by mass or less is subjected to a heat treatment, the amount of low-melting point compounds precipitated at the crystal grain boundaries is small. From this point of view, the amount of the eutectic structure is more preferably 3% by mass or less, and still more preferably 2% by mass or less.

[Relative Density]

The shaped article preferably has a relative density of 95% or more, more preferably 96% or more, and still more preferably 97% or more. The relative density of the shaped article can be improved by preventing the occurrence of solidification cracking in the shaped article in the powder-shaping method involving a rapid melting process and a rapid cooling process for solidification. The relative density of the shaped article is measured as follows. The weight in air and the weight in water, of the shaped article or a test piece cut out from the shaped article, as well as the density of water are used to calculate the density $(g/mm^3)$ of the shaped article or the test piece (by the Archimedes density measurement method). In the Archimedes density measurement method, the weight in air of the shaped article or the test piece is divided by the volume of the test piece (= weight in water of the test piece/density of water at the measured temperature), to calculate the density of the test piece. The density $(g/mm^3)$ of the powder used in the production of the shaped article is calculated by a dry density measurement (the gas used: helium gas, the apparatus used: Micromeritics AccuPyc 1330, manufactured by SHIMADZU Corporation) by the fixed volume expansion method. The relative density (%) of the shaped article is calculated from the density of the shaped article or the test piece and the density of the powder, in accordance with the following equation:

$$\text{Relative density of shaped article (\%)} = \text{density of shaped article or test piece/density of powder} \times 100.$$

EXAMPLES

The present invention will now be described based on Examples. However, the present invention should not be construed as limited to the description of Examples.

[Gas Atomization Method]

A raw material having a predetermined composition was heated and melted by high-frequency induction heating in vacuum and in a crucible made of alumina. The resulting molten metal was dropped from a nozzle provided at the bottom of the crucible and having a diameter of 5 mm. A high-pressure argon gas or a high-pressure nitrogen gas was sprayed to the molten metal, to obtain an alloy powder. Details of the composition of each of the alloy powders of Examples and Comparative Examples are shown in Tables 1 and 2. It is noted, in Tables 1 and 2, that "$Cr_{eq}$" and "$Ni_{eq}$" represent the chromium equivalent and the nickel equivalent respectively, and are calculated by the following equations, respectively.

$$Cr_{eq} = [Cr] + 1.4[Mo] + 1.5[Si] + 2[Nb]$$

$$Ni_{eq} = [Ni] + 0.3[Mn] + 22[C] + 14[N] + [Cu]$$

In the above described equations, [Cr], [Mo], [Si], [Nb], [Ni], [Mn], [C], [N] and [Cu] represent the contents (% by mass) of Cr, Mo, Si, Nb, Ni, Mn, C, N and Cu in the alloy powder, respectively].

[Table 1]

Table 1

| | Composition (% by mass) | | | | | | | | | | | | C + Si + Mn + N (% by mass) | Mo + Cu + Nb (% by mass) | $Cr_{eq}/Ni_{eq}$ | P + S (% by mass) |
|---|---|---|---|---|---|---|---|---|---|---|---|---|---|---|---|---|
| | Cr | Ni | Mo | Cu | Nb | C | Si | Mn | N | P | S | Fe | | | | |
| Example 1 | 16.8 | 4.2 | 0.2 | 4.0 | 0.6 | 0.1 | 0.2 | 0.2 | 0.03 | 0.01 | 0.01 | Balance | 0.53 | 4.8 | 1.71 | 0.02 |
| Example 2 | 15.8 | 4.5 | 0.2 | 3.3 | 0.2 | 0.1 | 0.1 | 0.3 | 0.02 | 0.01 | 0.01 | Balance | 0.52 | 3.7 | 1.60 | 0.02 |
| Example 3 | 16.3 | 5.6 | 0.1 | 3.2 | 0.1 | 0.1 | 0.3 | 0.1 | 0.03 | 0.01 | 0.01 | Balance | 0.53 | 3.4 | 1.49 | 0.02 |
| Example 4 | 17.4 | 8.4 | 0.5 | 2.9 | 0.8 | 0.1 | 0.3 | 0.2 | 0.02 | 0.01 | 0.01 | Balance | 0.62 | 4.2 | 1.46 | 0.02 |
| Example 5 | 15.5 | 4.7 | 0.1 | 4.3 | 0.3 | 0.1 | 0.3 | 0.2 | 0.02 | 0.01 | 0.01 | Balance | 0.62 | 4.7 | 1.45 | 0.02 |
| Example 6 | 17.9 | 5.7 | 0.2 | 3.3 | 0.1 | 0.1 | 0.3 | 0.1 | 0.02 | 0.01 | 0.01 | Balance | 0.52 | 3.6 | 1.64 | 0.02 |
| Example 7 | 17.2 | 4.1 | 0.1 | 3.9 | 0.1 | 0.1 | 0.3 | 0.3 | 0.02 | 0.01 | 0.01 | Balance | 0.72 | 4.1 | 1.70 | 0.02 |
| Example 8 | 16.8 | 5.3 | 0.1 | 3.3 | 0.3 | 0.1 | 0.2 | 0.3 | 0.02 | 0.01 | 0.01 | Balance | 0.62 | 3.7 | 1.60 | 0.02 |
| Example 9 | 17.5 | 12.6 | 2.7 | 0.2 | 0.3 | 0.1 | 0.6 | 0.5 | 0.04 | 0.01 | 0.01 | Balance | 1.24 | 3.2 | 1.45 | 0.02 |
| Example 10 | 18.6 | 11.7 | 2.9 | 0.3 | 0.4 | 0.1 | 0.5 | 1.4 | 0.03 | 0.01 | 0.01 | Balance | 2.03 | 3.6 | 1.61 | 0.02 |
| Example 11 | 20.0 | 10.4 | 3.6 | 0.1 | 0.1 | 0.1 | 0.4 | 1.5 | 0.03 | 0.01 | 0.01 | Balance | 2.03 | 3.8 | 1.90 | 0.02 |
| Example 12 | 17.9 | 12.4 | 2.5 | 0.1 | 0.1 | 0.1 | 1.0 | 0.4 | 0.04 | 0.01 | 0.01 | Balance | 1.54 | 2.7 | 1.50 | 0.02 |
| Example 13 | 19.8 | 15.0 | 3.6 | 0.1 | 0.3 | 0.1 | 0.4 | 0.6 | 0.02 | 0.02 | 0.01 | Balance | 1.12 | 4.0 | 1.47 | 0.03 |

| | Composition (% by mass) | | | | | | | | | | | C + Si + Mn + N (% by mass) | Mo + Cu + Nb (% by mass) | $Cr_{eq}/Ni_{eq}$ | P + S (% by mass) |
|---|---|---|---|---|---|---|---|---|---|---|---|---|---|---|---|
| | Cr | Ni | Mo | Cu | Nb | C | Si | Mn | N | P | S | Fe | | | | |
| Example 14 | 17.4 | 10.1 | 2.5 | 0.1 | 0.1 | 0.1 | 0.3 | 0.7 | 0.02 | 0.02 | 0.01 | Balance | 1.12 | 2.7 | 1.67 | 0.03 |
| Example 15 | 19.8 | 11.7 | 2.7 | 0.1 | 0.1 | 0.2 | 0.4 | 0.5 | 0.02 | 0.01 | 0.01 | Balance | 1.12 | 2.9 | 1.47 | 0.02 |
| | Composition (% by mass) | | | | | | | | | | | C + Si + Mn + N (% by mass) | Mo + Cu + Nb (% by mass) | $Cr_{eq}/Ni_{eq}$ | P + S (% by m ass) |
| | Cr | Ni | Mo | Cu | Nb | C | Si | Mn | N | P | S | Fe | | | | |
| Example 16 | 18.9 | 11.3 | 2.5 | 0.1 | 0.5 | 0.2 | 0.3 | 0.7 | 0.03 | 0.01 | 0.01 | Balance | 1.23 | 3.1 | 1.45 | 0.02 |
| Example 17 | 13.3 | 1.0 | 1.5 | 0.1 | 0.1 | 0.1 | 0.4 | 0.4 | 0.03 | 0.01 | 0.01 | Balance | 0.93 | 1.7 | 4.22 | 0.02 |
| Example 18 | 10.6 | 1.2 | 1.5 | 0.1 | 0.1 | 0.1 | 0.3 | 0.4 | 0.03 | 0.01 | 0.01 | Balance | 0.83 | 1.7 | 3.30 | 0.02 |
| Example 19 | 10.8 | 1.0 | 1.4 | 0.1 | 0.1 | 0.2 | 0.4 | 0.7 | 0.03 | 0.01 | 0.01 | Balance | 1.33 | 1.6 | 2.21 | 0.02 |
| Example 20 | 19.6 | 5.5 | 1.0 | 3.0 | 0.3 | 0.1 | 0.4 | 0.4 | 0.06 | 0.01 | 0.01 | Balance | 0.96 | 4.3 | 1.90 | 0.02 |
| Example 21 | 15.4 | 4.6 | 1.1 | 3.2 | 0.5 | 0.1 | 0.5 | 0.6 | 0.07 | 0.01 | 0.01 | Balance | 1.27 | 4.8 | 1.67 | 0.02 |
| Example 22 | 17.3 | 2.8 | 1.0 | 3.3 | 0.4 | 0.1 | 0.6 | 0.5 | 0.03 | 0.01 | 0.01 | Balance | 1.23 | 4.7 | 2.30 | 0.02 |
| Example 23 | 11.2 | 3.0 | 1.2 | 3.1 | 0.3 | 0.1 | 1.0 | 0.4 | 0.04 | 0.01 | 0.01 | Balance | 1.54 | 4.6 | 1.67 | 0.02 |
| Example 24 | 10.5 | 1.0 | 0.9 | 3.0 | 0.4 | 0.2 | 0.6 | 0.6 | 0.03 | 0.01 | 0.01 | Balance | 1.43 | 4.3 | 1.50 | 0.02 |

EP 3 738 695 A1

13

[Table 2]

Table 2

| | Composition (% by mass) | | | | | | | | | | | | $C + Si + Mn + N$ (% by mass) | $Mo + Cu + Nb$ (% by mass) | $Cr_{eq}/Ni_{eq}$ | $P + S$ (% by mass) |
|---|---|---|---|---|---|---|---|---|---|---|---|---|---|---|---|---|
| | Cr | Ni | Mo | Cu | Nb | C | Si | Mn | N | P | S | Fe | | | | |
| Comparative Example 1 | 16.5 | 4.5 | 0.5 | 4.0 | 0.6 | 0.1 | 0.2 | 0.2 | 0.02 | 0.02 | 0.01 | Balance | 0.52 | <u>5.1</u> | 1.69 | 0.03 |
| Comparative Example 2 | 15.4 | 4.6 | 0.5 | 4.2 | 0.6 | 0.1 | 0.1 | 0.2 | 0.02 | 0.01 | 0.01 | Balance | 0.42 | <u>5.3</u> | 1.54 | 0.02 |
| Comparative Example 3 | 15.3 | 6.0 | 0.1 | 3.9 | 0.1 | 0.1 | 0.5 | 0.8 | 0.02 | 0.01 | 0.01 | Balance | 1.42 | 4.1 | <u>1.30</u> | 0.02 |
| Comparative Example 4 | 17.2 | 8.0 | 0.1 | 3.3 | 0.1 | 0.1 | 1.3 | 0.8 | 0.02 | 0.01 | 0.01 | Balance | <u>2.22</u> | 3.5 | <u>1.39</u> | 0.02 |
| Comparative Example 5 | 15.0 | 5.6 | 0.1 | 3.4 | 0.3 | 0.1 | 0.2 | 0.3 | 0.02 | 0.01 | 0.01 | Balance | 0.62 | 3.8 | <u>1.39</u> | 0.02 |
| Comparative Example 6 | 15.3 | 5.7 | 0.2 | 3.6 | 0.1 | 0.1 | 0.7 | 0.9 | 0.02 | 0.02 | 0.01 | Balance | 1.72 | 3.9 | <u>1.40</u> | 0.03 |
| Comparative Example 7 | 17.0 | 4.5 | 0.1 | 3.9 | 0.1 | 0.1 | 0.3 | 0.3 | 0.03 | 0.02 | 0.02 | Balance | 0.73 | 4.1 | 1.60 | <u>0.04</u> |
| Comparative Example 8 | 15.8 | 5.5 | 0.1 | 3.0 | 0.3 | 0.1 | 0.4 | 0.1 | 0.04 | 0.03 | 0.02 | Balance | 0.64 | 3.4 | 1.52 | <u>0.05</u> |
| Comparative Example 9 | 16.5 | | 5.0 | 0.1 | 0.1 | 0.1 | 1.0 | 1.2 | 0.02 | $\frac{25.0}{0.01}$ | 0.01 | Balance | <u>2.32</u> | <u>5.2</u> | <u>0.90</u> | 0.02 |
| Comparative Example 10 | 19.6 | | 5.2 | 0.2 | 0.3 | 0.1 | 1.4 | 0.3 | 0.03 | $\frac{30.4}{0.01}$ | 0.01 | Balance | 1.83 | <u>5.7</u> | <u>0.89</u> | 0.02 |
| Comparative Example 11 | 19.0 | 12.9 | 3.0 | 0.2 | 0.2 | 0.1 | 1.5 | 0.7 | 0.03 | 0.01 | 0.01 | Balance | <u>2.33</u> | 3.4 | 1.62 | 0.02 |
| Comparative Example 12 | 15.9 | 12.3 | 2.5 | 0.5 | 0.5 | 0.3 | 2.0 | 0.9 | 0.02 | 0.01 | 0.01 | Balance | <u>3.22</u> | 3.5 | <u>1.17</u> | 0.02 |
| Comparative Example 13 | 18.4 | <u>16.4</u> | 4.0 | 0.2 | 0.6 | 0.3 | 1.2 | 0.5 | 0.02 | 0.01 | 0.01 | Balance | 2.02 | 4.8 | <u>1.14</u> | 0.02 |

(continued)

| | Composition (% by mass) | | | | | | | | | | | | C + Si + Mn + N (% by mass) | Mo + Cu + Nb (% by mass) | $Cr_{eq}/Ni_{eq}$ | P + S (% by mass) |
|---|---|---|---|---|---|---|---|---|---|---|---|---|---|---|---|---|
| | Cr | Ni | Mo | Cu | Nb | C | Si | Mn | N | P | S | Fe | | | | |
| Comparative Example 14 | 17.6 | 11.5 | 3.0 | 0.1 | 0.3 | 0.1 | 0.6 | 0.7 | 0.03 | 0.01 | 0.03 | Balance | 1.43 | 3.4 | 1.61 | 0.04 |
| Comparative Example 15 | 15.6 | 13.6 | 3.8 | 0.2 | 0.3 | 0.1 | 0.5 | 0.9 | 0.03 | 0.01 | 0.01 | Balance | 1.53 | 4.3 | <u>1.33</u> | 0.02 |
| Comparative Example 16 | 15.9 | 13.2 | 3.5 | 0.3 | 0.1 | 0.1 | 0.8 | 0.7 | 0.02 | 0.02 | 0.03 | Balance | 1.62 | 3.9 | 1.37 | <u>0.05</u> |
| Comparative Example 17 | <u>25.0</u> | 0.3 | 0.7 | 0.1 | 0.2 | 0.1 | 1.0 | 1.5 | 0.03 | 0.01 | 0.01 | Balance | <u>2.63</u> | 1.0 | 8.03 | 0.02 |
| Comparative Example 18 | <u>22.5</u> | 1.2 | 0.8 | 0.1 | 0.1 | 0.1 | 0.4 | 0.5 | 0.02 | 0.02 | 0.03 | Balance | 1.02 | 1.0 | 6.21 | <u>0.05</u> |
| Comparative Example 19 | <u>40.0</u> | 1.0 | 0.6 | 0.1 | 0.1 | 0.1 | 0.5 | 0.7 | 0.03 | 0.03 | 0.02 | Balance | 1.33 | 0.8 | 10.63 | 0.05 |
| Comparative Example 20 | 18.5 | 5.5 | 0.7 | 0.1 | 0.1 | 0.1 | 0.3 | 0.5 | 0.05 | 0.02 | 0.03 | Balance | 0.95 | 0.9 | 2.33 | <u>0.05</u> |
| Comparative Example 21 | 13.4 | 4.6 | 0.5 | 0.3 | 0.2 | 0.1 | 0.6 | 0.6 | 0.04 | 0.01 | 0.04 | Balance | 1.34 | 1.0 | 1.96 | 0.05 |
| Comparative Example 22 | 19.3 | 2.8 | 0.1 | 0.1 | 0.1 | 0.1 | 1.0 | 0.1 | 0.04 | 0.02 | 0.03 | Balance | 1.24 | 0.3 | 3.72 | <u>0.05</u> |
| Comparative Example 23 | 10.5 | 1.5 | 0.5 | 0.1 | 0.1 | 0.1 | 0.8 | 0.6 | 0.04 | 0.04 | 0.06 | Balance | 1.54 | 0.7 | 2.78 | <u>0.10</u> |
| Comparative Example 24 | 10.5 | 1.0 | 0.4 | 0.2 | 0.1 | 0.1 | 0.5 | 0.8 | 0.02 | 0.03 | 0.07 | Balance | 1.42 | 0.7 | 3.06 | <u>0.10</u> |

As shown in Table 1, the alloy powders of Examples 1 to 24 satisfy the following requirements (1) to (7):

(1) Cr is contained in an amount of 10.5% by mass or more and 20.0% by mass or less;
(2) Ni is contained in an amount of 1.0% by mass or more and 15.0% by mass or less;
(3) C, Si, Mn and N are contained in a total amount of 0% by mass or more and 2.0% by mass or less;
(4) Mo, Cu and Nb are contained in a total amount of 0% by mass or more and 5.0% by mass or less;
(5) P and S are contained in a total amount of 0% by mass or more and 0.03% by mass;
(6) the balance is Fe; and
(7) $Cr_{eq}/Ni_{eq} \geq 1.5$.

In contrast, as shown in Table 2, the alloy powders of Comparative Examples 1 to 24 do not satisfy any one or more of the above described requirements (1) to (7). It is noted, in Table 2, that values which do not satisfy the requirement (1) are underlined. The same applies for the other requirements.

[Classification]

Each of the alloy powders produced by the gas atomization method is subjected to classification, and the particle size of the respective particles constituting each powder was adjusted to 63 $\mu$m or less, to be used in the following measurements.

[Cumulative 50 vol% particle size, $D_{50}$ ($\mu$m)]

The cumulative 50 vol% particle size, $D_{50}$ ($\mu$m), of each powder was determined, based on the particle size distribution measured by the laser diffraction scattering method, using a laser diffraction scattering type particle size distribution analyzer, "Microtrac MT3000", manufactured by Nikkiso Co., Ltd. In the measurement of the particle size distribution using Microtrac MT3000, the powder and pure water are poured into the cell of this apparatus, and the particle size is detected based on the light scattering information of the particles of the powder. The $D_{50}$ ($\mu$m) of each alloy powder is shown in Tables 3 and 4.

[Tap Density, TD (Mg/m$^3$)]

A quantity of 50 g of each powder was filled into a cylinder with a capacity of 100 cm$^3$, and tapping was carried out under the conditions of a drop height of 10 mm and the number of times of 200. Thereafter, the tap density, TD (Mg/m$^3$), of the powder was measured. The tap density was measured in accordance with JIS Z2512. The TD (Mg/m$^3$) of each alloy powder is shown in Tables 3 and 4.

[$D_{50}$/TD]

The ratio $D_{50}$/TD was obtained based on the $D_{50}$ ($\mu$m) and the TD (Mg/m$^3$). The ratio $D_{50}$/TD was determined as the value of X/Y, when the $D_{50}$ is defined as X ($\mu$m) and the TD is defined as Y (Mg/m$^3$). The ratio $D_{50}$/TD of each alloy powder is shown in Tables 3 and 4.

[Table 3]

Table 3

|  | $D_{50}$ ($\mu$m) | TD (Mg/m$^3$) | $D_{50}$/TD |
|---|---|---|---|
| Example 1 | 50 | 4.0 | 12.5 |
| Example 2 | 52 | 4.2 | 12.4 |
| Example 3 | 43 | 4.4 | 9.8 |
| Example 4 | 40 | 4.7 | 8.5 |
| Example 5 | 45 | 4.8 | 9.4 |
| Example 6 | 40 | 5.0 | 8.0 |

(continued)

| | $D_{50}$ ($\mu$m) | TD (Mg/m$^3$) | $D_{50}$/TD |
|---|---|---|---|
| Example 7 | 70 | 3.5 | 20.0 |
| Example 8 | 40 | 5.0 | 8.0 |
| Example 9 | 23 | 5.0 | 4.6 |
| Example 10 | 25 | 5.2 | 4.8 |
| Example 11 | 40 | 4.8 | 8.3 |
| Example 12 | 38 | 4.5 | 8.4 |
| Example 13 | 50 | 4.4 | 11.4 |
| Example 14 | 40 | 4.8 | 8.3 |
| Example 15 | 42 | 4.8 | 8.8 |
| Example 16 | 44 | 4.7 | 9.4 |
| Example 17 | 52 | 4.4 | 11.8 |
| Example 18 | 35 | 5.4 | 6.5 |
| Example 19 | 4 | 20.0 | 0.2 |
| Example 20 | 40 | 4.9 | 8.2 |
| Example 21 | 40 | 4.9 | 8.2 |
| Example 22 | 38 | 5.0 | 7.6 |
| Example 23 | 23 | 5.5 | 4.2 |
| Example 24 | 44 | 4.7 | 9.4 |

[Table 4]

Table 4

| | $D_{50}$ ($\mu$m) | TD (Mg/m$^3$) | $D_{50}$/TD |
|---|---|---|---|
| Comparative Example 1 | 50 | 4.5 | 11.1 |
| Comparative Example 2 | 48 | 4.4 | 10.9 |
| Comparative Example 3 | 42 | 4.6 | 9.1 |
| Comparative Example 4 | 37 | 5.0 | 7.4 |
| Comparative Example 5 | 48 | 4.8 | 10.0 |
| Comparative Example 6 | 47 | 4.2 | 11.2 |
| Comparative Example 7 | 60 | 2.9 | 20.7 |
| Comparative Example 8 | 42 | 4.8 | 8.8 |
| Comparative Example 9 | 25 | 5.5 | 4.5 |
| Comparative Example 10 | 20 | 5.2 | 3.8 |
| Comparative Example 11 | 43 | 4.8 | 9.0 |
| Comparative Example 12 | 15 | 6.0 | 2.5 |
| Comparative Example 13 | 24 | 5.0 | 4.8 |
| Comparative Example 14 | 40 | 4.8 | 8.3 |

(continued)

|  | $D_{50}$ ($\mu$m) | TD (Mg/m$^3$) | $D_{50}$/TD |
|---|---|---|---|
| Comparative Example 15 | 42 | 4.7 | 8.9 |
| Comparative Example 16 | 46 | 4.6 | 10.0 |
| Comparative Example 17 | 50 | 4.5 | 11.1 |
| Comparative Example 18 | 35 | 5.1 | 6.9 |
| Comparative Example 19 | 3 | 21.0 | 0.1 |
| Comparative Example 20 | 38 | 4.6 | 8.3 |
| Comparative Example 21 | 40 | 4.5 | 8.9 |
| Comparative Example 22 | 36 | 5.0 | 7.2 |
| Comparative Example 23 | 20 | 5.5 | 3.6 |
| Comparative Example 24 | 45 | 4.4 | 10.2 |

As shown in Table 3, the alloy powders of Examples 1 to 24 satisfy the following requirement (8):
(8) $0.2 \leq D_{50}$/TD $\leq 20$.
In contrast, as shown in Table 4, the alloy powders of some of Comparative Examples 1 to 24 (Comparative Examples 7 and 19) do not satisfy the above described requirement (8). It is noted, in Table 4, that values which do not satisfy the requirement (8) are under lined.

[Shaping]

The additive manufacturing method by a three-dimensional additive manufacturing apparatus (a 3D printer "EOS-M280", manufactured by EOS) was carried out, using each of the powders of Examples 1 to 24 and Comparative Examples 1 to 24 as a raw material, to obtain a shaped article. The powder bed fusion method using a laser beam is carried out by the above described three-dimensional additive manufacturing apparatus. The energy density, ED, of the laser beam is shown in Tables 1 and 2. The energy density, ED (J/mm$^3$), was calculated in accordance with the following equation:

$$ED = P/(V \times d \times t).$$

In the above described equation, P represents the output (W) of the laser beam, V represents the scanning speed (mm/s), d represents the scanning pitch (mm), and t represents the layer thickness (mm). Conditions for laser irradiation are as follows.
Laser output: 200 W
Scanning speed: from 800 to 1,200 mm/s
Scanning pitch: from 0.08 to 1.20 mm
Layer thickness: 0.04 mm

[ED/$D_{50}$]

The ratio ED/$D_{50}$ was determined based on the $D_{50}$ ($\mu$m) and the ED (J/mm$^3$). The ratio ED/$D_{50}$ was determined as the value of Z/X, assuming that the $D_{50}$ is X ($\mu$m) and that the TD is Z (Mg/m$^3$). The ratio ED/$D_{50}$ of each alloy powder is shown in Tables 5 and 6.

[Measurement of Proportion of Eutectic Structure]

A test piece in the form of a 10 mm cube (10 mm × 10 mm × 10 mm) was prepared from each shaped article. The test piece was cut in the middle, and embedded in an electrically conductive resin. After polishing the cross section of the test piece with a fine buff of No. 1000 or higher, the cross section of the test piece was corroded with an etchant. The resulting test piece was subjected to an elemental analysis using a scanning electron microscope (SEM), at arbitrarily selected 10 locations (a region of 200 $\mu$m × 200 $\mu$m per one location). The amount (% by mass) of the eutectic structure composed of low-melting point compounds containing P, S, Si, Nb etc., was measured by calculating the eutectic temperature using a statistical thermodynamic calculation system (Thermo-Calc). The eutectic temperature (°C) and the amount (% by mass) of the eutectic structure within the grains in each shaped article, as well as the eutectic temperature (°C) and the amount (% by mass) of the eutectic structure in the grain boundaries in each shaped article, are shown in Tables 5 and 6.

[Evaluation of Cracks]

A test piece in the form of a 10 mm cube (10 mm × 10 mm × 10 mm) was prepared from each shaped article. The resulting test piece was cut in the direction parallel to the shaping direction. The cross section of the test piece was photographed at a magnification of 100-fold in 10 visual fields, using a light microscope. Thereafter, the number of cracks were calculated by image processing. The total number of cracks observed in the 10 visual fields are shown in Table 5 and 6.

[Relative Density of Shaped Article]

A test piece in the form of a 10 mm cube (10 mm × 10 mm × 10 mm) was prepared. The density $(g/mm^3)$ of the thus prepared test piece was calculated (Archimedes density measurement method) using the weight in air and the weight in water of the test piece as well as the density of water. In the Archimedes density measurement method, the weight in air of the test piece was divided by the volume of the test piece (= weight in water of the test piece/density of water at the measured temperature), to calculate the density of the test piece. The density $(g/mm^3)$ of the powder was calculated by a dry density measurement (the gas used: helium gas, the apparatus used: Micromeritics AccuPyc 1330, manufactured by SHIMADZU Corporation) by the fixed volume expansion method. The relative density (%) of the shaped article was calculated from the density of the test piece and the density of the powder, in accordance with the following equation:

$$\text{Relative density of shaped article (\%)} = \text{density of test piece/density of powder} \times 100.$$

The relative density of each shaped article was evaluated in accordance with the following criteria:

evaluation "A": 99% or more;
evaluation "B": 98% or more and less than 99%;
evaluation "C: 97% or more and less than 98%;
evaluation "D": 96% or more and less than 97%; and
evaluation "E": less than 96%.

[Table 5]

Table 5

| | $D_{50}$ (μm) | ED (J/mm³) | ED/$D_{50}$ | Eutectic structure within grains | | Eutectic structure in grain boundaries | | Number of cracks | Relative density (%) | Evaluation |
|---|---|---|---|---|---|---|---|---|---|---|
| | | | | Eutectic temperature (°C) | Amount (% by mass) | Eutectic temperature (°C) | Amount (% by mass) | | | |
| Example 1 | 50 | 100 | 2.0 | 1000 | 1.4 | 1000 | 3.0 | 5 | 99.5 | A |
| Example 2 | 52 | 100 | 1.9 | 1000 | 1.2 | 1000 | 2.3 | 5 | 99.4 | A |
| Example 3 | 43 | 100 | 2.3 | 1000 | 0.5 | 1000 | 2.6 | 5 | 99.5 | A |
| Example 4 | 40 | 100 | 2.5 | 1000 | 1.0 | 1000 | 2.5 | 3 | 99.8 | A |
| Example 5 | 45 | 100 | 2.2 | 1250 | 0.8 | 1250 | 2.1 | 6 | 99.4 | A |
| Example 6 | 40 | 80 | 2.0 | 1250 | 0.8 | 1250 | 5.4 | 12 | 98.4 | B |
| Example 7 | 70 | 40 | 0.6 | 1000 | 1.5 | 1250 | 7.4 | 16 | 97.4 | C |
| Example 8 | 40 | 120 | 3.0 | 1000 | 1.0 | 1000 | 2.6 | 8 | 99.3 | A |
| Example 9 | 23 | 100 | 4.3 | 600 | 1.8 | 600 | 7.0 | 16 | 97.2 | C |
| Example 10 | 25 | 120 | 4.8 | 600 | 1.9 | 600 | 6.8 | 15 | 97.8 | C |
| Example 11 | 40 | 80 | 2.0 | 600 | 1.0 | 600 | 5.0 | 11 | 98.6 | B |
| Example 12 | 38 | 100 | 2.6 | 600 | 0.8 | 600 | 2.4 | 5 | 99.7 | A |
| Example 13 | 50 | 35 | 0.7 | 600 | 2.4 | 600 | 11.0 | 22 | 96.8 | D |

(continued)

| | $D_{50}$ (μm) | ED (J/mm³) | ED/$D_{50}$ | Eutectic structure within grains | | Eutectic structure in grain boundaries | | Number of cracks | Relative density (%) | Evaluation |
|---|---|---|---|---|---|---|---|---|---|---|
| | | | | Eutectic temperature (°C) | Amount (% by mass) | Eutectic temperature (°C) | Amount (% by mass) | | | |
| Example 14 | 40 | 100 | 2.5 | 1000 | 0.7 | 600 | 4.8 | 13 | 98.3 | B |
| Example 15 | 42 | 100 | 2.4 | 1000 | 0.9 | 1000 | 2.3 | 7 | 99.4 | A |
| Example 16 | 44 | 40 | 0.9 | 1000 | 0.5 | 1000 | 7.0 | 18 | 97.1 | C |
| Example 17 | 52 | 100 | 1.9 | 1350 | 0.7 | 1350 | 5.3 | 13 | 98.4 | B |
| Example 18 | 35 | 150 | 4.3 | 1350 | 2.0 | 1350 | 6.2 | 16 | 97.5 | C |
| Example 19 | 4 | 20 | 4.9 | 1000 | 2.8 | 1000 | 10.2 | 25 | 96.6 | D |
| Example 20 | 40 | 170 | 4.3 | 1000 | 1.7 | 1000 | 6.0 | 17 | 97.6 | C |
| Example 21 | 40 | 100 | 2.5 | 1000 | 2.5 | 1000 | 9.8 | 26 | 96.2 | D |
| Example 22 | 38 | 100 | 2.6 | 1000 | 2.6 | 1000 | 10.3 | 27 | 96.3 | D |
| Example 23 | 23 | 100 | 4.3 | 1000 | 2.3 | 1000 | 6.1 | 25 | 96.9 | D |
| Example 24 | 44 | 40 | 0.9 | 1000 | 2.8 | 1000 | 6.3 | 25 | 96.8 | D |

[Table 6]

[Table 6]

Table 6

| | $D_{50}$ (μm) | ED (J/mm³) | ED/$D_{50}$ | Eutectic structure within grains | | Eutectic structure in grain boundaries | | Number of cracks | Relative density (%) | Evaluation |
|---|---|---|---|---|---|---|---|---|---|---|
| | | | | Eutectic temperature (°C) | Amount (% by mass) | Eutectic temperature (°C) | Amount (% by mass) | | | |
| Comparative Example 1 | 50 | 100 | 2.0 | 1000 | 6.4 | 1000 | 18.0 | 45 | 88.4 | E |
| Comparative Example 2 | 48 | 100 | 2.1 | 1000 | 6.3 | 1000 | 18.4 | 55 | 87.4 | E |
| Comparative Example 3 | 42 | 100 | 2.4 | 1000 | 5.5 | 1400 | 22.4 | 56 | 87.3 | E |
| Comparative Example 4 | 37 | 100 | 2.7 | 1000 | 6.0 | 1000 | 15.2 | 43 | 88.9 | E |
| Comparative Example 5 | 48 | 100 | 2.1 | 1400 | 1.5 | 1400 | 26.9 | 48 | 88.2 | E |
| Comparative Example 6 | 47 | 30 | 0.6 | 600 | 3.5 | 600 | 28.7 | 60 | 85.5 | E |
| Comparative Example 7 | 60 | 30 | 0.2 | 1250 | 2.3 | 1250 | 24.3 | 41 | 89.6 | E |
| Comparative Example 8 | 42 | 120 | 2.9 | 1250 | 3.2 | 1250 | 24.9 | 62 | 85.3 | E |
| Comparative Example 9 | 25 | 100 | 4.0 | 1000 | 6.2 | 1000 | 26.7 | 42 | 88.9 | E |
| Comparative Example 10 | 20 | 120 | 6.0 | 1000 | 7.2 | 600 | 21.3 | 45 | 88.0 | E |
| Comparative Example 11 | 43 | 80 | 1.9 | 600 | 6.0 | 600 | 15.8 | 46 | 88.0 | E |
| Comparative Example 12 | 15 | 100 | 6.7 | 600 | 5.6 | 600 | 18.7 | 43 | 88.7 | E |

| | D$_{50}$ (μm) | ED (J/mm³) | ED/D$_{50}$ | Eutectic structure within grains | | Eutectic structure in grain boundaries | | Number of cracks | Relative density (%) | Evaluation |
|---|---|---|---|---|---|---|---|---|---|---|
| | | | | Eutectic temperature (°C) | Amount (% by mass) | Eutectic temperature (°C) | Amount (% by mass) | | | |
| Comparative Example 13 | 24 | 100 | 4.2 | 1400 | 0.9 | 1400 | 24.0 | 46 | 88.5 | E |
| Comparative Example 14 | 40 | 100 | 2.5 | 1400 | 0.9 | 1400 | 22.3 | 40 | 89.2 | E |
| Comparative Example 15 | 42 | 100 | 2.4 | 1000 | 0.8 | 1000 | 25.4 | 42 | 89.4 | E |
| Comparative Example 16 | 46 | 40 | 0.9 | 1000 | 3.7 | 1000 | 31.7 | 46 | 88.7 | E |
| Comparative Example 17 | 50 | 100 | 2.0 | 1000 | 1.5 | 1350 | 29.5 | 43 | 89.1 | E |
| Comparative Example 18 | 35 | 150 | 4.3 | 1000 | 1.2 | 1350 | 30.5 | 42 | 89.0 | E |
| Comparative Example 19 | 3 | 20 | | 1000 | 1.0 | 6.7 1000 | 36.8 | 43 | 89.0 | E |
| Comparative Example 20 | 38 | 100 | 2.6 | 1000 | 3.6 | 1000 | 22.3 | 52 | 86.7 | E |
| Comparative Example 21 | 40 | 100 | 2.5 | 600 | 3.5 | 600 | 20.8 | 60 | 85.9 | E |
| Comparative Example 22 | 36 | 100 | 2.8 | 600 | 3.3 | 600 | 22.0 | 55 | 87.8 | E |
| Comparative Example 23 | 20 | 60 | 3.0 | 1000 | 2.0 | 1000 | 20.5 | 43 | 88.6 | E |
| Comparative Example 24 | 45 | 80 | 1.8 | 1000 | 0.4 | 1000 | 22.6 | 43 | 89.5 | E |

As shown in Table 5, the shaped articles of Examples 1 to 24 satisfy the following requirements (9) to (12):

(9) $0.7 \leq ED/D_{50} \leq 5.0$;
(10) the amount of the eutectic structure (in the grains) having a eutectic temperature of from 600 to 1,350°C is 5% by mass or less;
(11) The amount of the eutectic structure (in the grain boundaries) having a eutectic temperature of from 600 to 1,350°C is 20% by mass or less;
(12) the number of cracks is 25 or less; and
(13) the relative density of the shaped article is 96% or more.

In contrast, as shown in Table 6, the shaped articles of Comparative Examples 1 to 24 do not satisfy any one or more of the above described requirements (9) to (11). Further, the shaped articles of Comparative Examples 1 to 24 do not satisfy the above described requirements (12) and (13). It is noted, in Table 6, that values which do not satisfy the requirement (9) are under lined. The same applies for the other requirements.

The above results have revealed that, by carrying out the additive manufacturing method using an alloy powder having a composition satisfying the above described requirements (1) to (7), it is possible to produce a shaped article in which the amount of the eutectic structure (in the grains) having a eutectic temperature of from 600 to 1,350°C is 5% by mass or less, and the amount of the eutectic structure (in the grain boundaries) having a eutectic temperature of from 600 to 1,350°C is 20% by mass or less, as well as to produce a shaped article in which the occurrence of solidification cracking can be prevented and which has a relative density of 96% or more. Further, it has also been revealed that the ratio $D_{50}/TD$ is preferably 0.2 or more and 20 or less, and that the ratio $ED/D_{50}$ is preferably 0.7 or more and 5.0 or less.

As described above, the stainless steel powder according to the present invention are excellent in a variety of properties. The advantages of the present invention are evident from the above results. The stainless steel powder according to the present invention is also suitable for use in a type of 3D printer in which the powder is injected from a nozzle. This powder is also suitable for a type of laser coating method in which the powder is injected from a nozzle.

**Claims**

1. A powder of a stainless steel comprising:

   Cr in an amount of 10.5% by mass or more and 20.0% by mass or less;
   Ni in an amount of 1.0% by mass or more and 15.0% by mass or less;
   C, Si, Mn and N in a total amount of 0% by mass or more and 2.0% by mass or less;
   Mo, Cu and Nb in a total amount of 0% by mass or more and 5.0% by mass or less; and
   P and S in a total amount of 0% by mass or more and 0.03% by mass or less;
   with the balance being Fe and unavoidable impurities,
   wherein the stainless steel satisfies the following formula (1):

$$Cr_{eq}/Ni_{eq} \geq 1.5 \qquad (1)$$

   wherein $Cr_{eq}$ and $Ni_{eq}$ are calculated by the following formulae (1-1) and (1-2), respectively:

$$Cr_{eq} = [Cr] + 1.4[Mo] + 1.5[Si] + 2[Nb] \qquad (1-1)$$

$$Ni_{eq} = [Ni] + 0.3[Mn] + 22[C] + 14[N] + [Cu] \quad (1-2)$$

   wherein [Cr], [Mo], [Si], [Nb], [Ni], [Mn], [C], [N] and [Cu] represent the contents (% by mass) of Cr, Mo, Si, Nb, Ni, Mn, C, N and Cu in the stainless steel, respectively.

2. The powder according to claim 1, wherein the total content of C, Si, Mn and N in the stainless steel is 0.3% by mass or more.

3. The powder according to claim 1, comprising one, two, three or four selected from the group consisting of:

C in an amount of 0.1% by mass or more and 0.2% by mass or less;
Si in an amount of 0.1% by mass or more and 1.0% by mass or less;
Mn in an amount of 0.1% by mass or more and 1.5% by mass or less; and
N in an amount of 0.02% by mass or more and 0.07% by mass or less.

**4.** The powder according to claim 1, wherein the total content of Mo, Cu and Nb in the stainless steel is 0.1% by mass or more.

**5.** The powder according to claim 1, comprising one, two or three selected from the group consisting of:

Mo in an amount of 0.1% by mass or more and 3.6% by mass or less;
Cu in an amount of 0.1% by mass or more and 4.3% by mass or less; and
Nb in an amount of 0.1% by mass or more and 0.8% by mass or less.

**6.** The powder according to claim 1, wherein, assuming that the powder has a cumulative 50 vol% particle size, $D_{50}$, of X ($\mu$m), and a tap density, TD, of Y ($Mg/m^3$), X/Y is 0.2 or more and 20 or less.

**7.** The powder according to claim 6, wherein the $D_{50}$ is 4 $\mu$m or more and 70 $\mu$m or less.

**8.** The powder according to claim 6, wherein the TD is 3.5 $Mg/m^3$ or more and 20 $Mg/m^3$ or less.

**9.** A powder material for producing a shaped article, comprising the powder according to claim 1.

**10.** A method of producing a shaped article, the method comprising the following steps of:

preparing the powder according to claim 1; and
subjecting the powder to a powder-shaping method involving a rapid melting process and a rapid cooling process for solidification, to obtain the shaped article,
wherein the structure of the shaped article comprises, in its crystal grains, a eutectic structure having a eutectic temperature of 600°C or higher and 1,350°C or lower in an amount of 5% by mass or less, and
wherein the structure of the shaped article comprises, in its crystal grain boundaries, a eutectic structure having a eutectic temperature of 600°C or higher and 1,350°C or lower in an amount of 20% by mass or less.

**11.** The method according to claim 10,
wherein the structure of the shaped article comprises, in its crystal grains, the eutectic structure having a eutectic temperature of 600°C or higher and 1,350°C or lower in an amount of 2% by mass or less, and
wherein the structure of the shaped article comprises, in its crystal grain boundaries, the eutectic structure having a eutectic temperature of 600°C or higher and 1,350°C or lower in an amount of 10% by mass or less.

**12.** The method according to claim 10, wherein the powder-shaping method is an additive manufacturing method.

**13.** The method according to claim 12, wherein, assuming that an energy density, ED, of Z ($J/mm^3$) is applied to the powder in the additive manufacturing method, and that the powder has a cumulative 50 vol% particle size, $D_{50}$, of X ($\mu$m), Z/X is 0.7 or more and 5.0 or less.

**14.** The method according to claim 10, wherein the shaped article has a relative density of 95% or more.

## INTERNATIONAL SEARCH REPORT

| International application No. |
|---|
| PCT/JP2019/000268 |

**A. CLASSIFICATION OF SUBJECT MATTER**
Int. Cl. B22F1/00(2006.01)i, B22F3/105(2006.01)i, B22F3/16(2006.01)i, B33Y70/00(2015.01)i, C22C33/02(2006.01)i, C22C38/00(2006.01)i, C22C38/48(2006.01)i
According to International Patent Classification (IPC) or to both national classification and IPC

**B. FIELDS SEARCHED**

Minimum documentation searched (classification system followed by classification symbols)
Int. Cl. B22F1/00, B22F3/105, B22F3/16, B33Y70/00, C22C33/02, C22C38/00, C22C38/48

Documentation searched other than minimum documentation to the extent that such documents are included in the fields searched
Published examined utility model applications of Japan     1922-1996
Published unexamined utility model applications of Japan     1971-2019
Registered utility model specifications of Japan     1996-2019
Published registered utility model applications of Japan     1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | US 2009/0047165 A1 (EOS GMBH ELECTRO OPTICAL | 1-5, 9 |
| Y | SYSTEMS) 19 February 2009, claims, paragraphs [0072]-[0113], fig. 1, 2 & EP 1992709 A1 | 6-8, 10-14 |
| X | JP 2003-166003 A (SEIKO EPSON CORP.) 13 June 2003, | 1-5, 9 |
| Y | claims, paragraphs [0018]-[0133], table 1 (Family: none) | 6-8, 10-14 |
| X | JP 11-222652 A (DAIDO STEEL CO., LTD.) 17 August | 1-5, 9 |
| Y | 1999, claims, paragraphs [0006]-[0018], table 1 (Family: none) | 6-8, 10-14 |

☒ Further documents are listed in the continuation of Box C. ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 03.04.2019 | 16.04.2019 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
|---|
| PCT/JP2019/000268 |

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2017-186620 A (SEIKO EPSON CORP.) 12 October 2017, paragraphs [0089]-[0099], [0128]-[0135] & US 2017/0291220 A1, paragraphs [0131]-[0141], [0170]-[0177] & CN 107262707 A | 6-8 |
| Y | JP 57-121866 A (NIPPON STEEL CORP.) 29 July 1982, page 1, lower right column, line 10 to page 2, upper right column, line 17 (Family: none) | 10-14 |
| A | WO 2015/137507 A1 (SANYO SPECIAL STEEL CO., LTD.) 17 September 2015, entire text & JP 2015-175026 A & JP 2015-175054 A & US 2016/0333450 A1 & EP 3117934 A1 | 1-14 |

Form PCT/ISA/210 (continuation of second sheet) (January 2015)

**EP 3 738 695 A1**

**REFERENCES CITED IN THE DESCRIPTION**

**Patent documents cited in the description**

- JP 4661842 B
- JP 2006233308 A
- JP 2003113446 A